# EUROPÄISCHE PATENTANMELDUNG

(11) **EP 4 102 117 A1**
(43) Veröffentlichungstag der Anmeldung: **14.12.2022**
(21) Anmeldenummer: 22176106.7
(22) Anmeldetag: 30.05.2022
(51) Int. Cl.: F16K 17/04, G05D 16/06, F16K 31/126, F16K 7/12, F16K 31/128

(54) **DIFFERENZDRUCKVENTIL FÜR EIN HEIZGERÄT, HEIZGERÄT UND VERWENDUNG EINER MEMBRAN**

(30) Priorität: 04.06.2021 DE 102021114426
(71) Anmelder: Vaillant GmbH, 42859 Remscheid NRW (DE)
(72) Erfinder: Axel, Birrenbach, 42855 Remscheid (DE); Bahlmann, Hermann-Josef, 49762 Lathen (DE)
(74) Vertreter: Popp, Carsten

(57) **Zusammenfassung**

Es wird ein Differenzdruckventil (1) für ein Heizgerät (19) vorgeschlagen, aufweisend eine Membran (9) als Wirkfläche (15) für einen Differenzdruck. Ein hier vorgeschlagenes Differenzdruckventil (1) kann in ein Heizgerät zwischen einer Vorlaufleitung und einer Rücklaufleitung eines Heizkreislaufes (2) installiert werden. Ein Differenzdruckventil (1) (Bypass- oder Überströmventil) kann in einem Heizgerät (19) eine Verbindung zwischen einem Vorlauf und einem Rücklauf eines Heizkreislaufes (2) in Abhängigkeit der Druckdifferenz zwischen Vorlauf und Rücklauf öffnen und schließen.

## Beschreibung

Die Erfindung betrifft ein Differenzdruckventil für ein Heizgerät, ein Heizgerät und eine Verwendung einer Membran.

Heizgeräte weisen in der Regel ein Differenzdruckventil, auch als Bypass- oder Überströmventil bezeichnet, auf. Häufig ist ein Differenzdruckventil in einem Heizgerät zwischen einem Vorlauf und einem Rücklauf eines Heizkreislaufes angeordnet, so dass ein Öffnen des Differenzdruckventils einen internen Heizgerätekreislauf bildet, in dem der Wärmeträger über einen Wärmeerzeuger und das Differenzdruckventil zirkuliert. Ein interner Heizgerätekreislauf kann vorteilhaft eine sichere Funktion des Wärmeerzeugers gewährleisten, da Siedeeffekte (also ein Sieden des Wärmeträgers im Wärmeerzeuger, beispielsweise hervorgerufen durch einen zu geringen Volumenstrom des Wärmeträgers im Wärmeerzeuger) durch den internen Heizgerätekreislauf wirkungsvoll vermieden werden können. Gleichfalls kann mittels eines Differenzdruckventils ein Teillastbereich des Heizsystems realisiert werden, in dem das Differenzdruckventil eine Mischfunktion übernimmt. Weiterhin vorteilhaft kann mittels eines Differenzdruckventils eine gewünschte Vorlauftemperatur schnell erreicht werden, indem das Heizgerät vorerst nur den internen Heizgerätekreislauf erwärmt. Zudem können durch ein Differenzdruckventil hydraulische Druckspitzen, beispielsweise ausgelöst durch eine Umwälzpumpe, und eine damit verbundene Geräuschentwicklung im Heizkreislauf vermieden werden.

Ein Differenzdruckventil kann beispielsweise einen mit einer Federkraft unterstützten Ventilteller zur Aufnahme eines Differenzdruckes umfassen. Bei Auftreten eines definierten Differenzdruckes kann die Federkraft überwunden und der Ventilteller derart in einer Führung verschoben werden, dass das Differenzdruckventil in Abhängigkeit von dem vorhandenen Differenzdruck öffnet bzw. schließt. Der Ventilteller kann häufig ein Bestandteil eines Verstellelements sein, dass durch eine Verschiebung seiner Position im Bereich des Zusammenflusses von mindestens drei Leitungen eine Volumenstrom aufteilen kann.

Beispielsweise in der DE 40 39 644 A1 wird ein Überströmventil vorgeschlagen, aufweisend einen Ventilteller, der mit einem Ventilschaft axial geführt ist. Nachteilig kann eine Führung des Ventilschaftes zu sogenannten Stick-Slip-Effekten führen, die ein genaues Ansteuern des Differenzdruckventils schwer bis unmöglich machen.

So hat sich gezeigt, dass bekannte Differenzdruckventile häufig nicht ausreichend präzise arbeiten. Beispielsweise konnte festgestellt werden, dass Differenzdruckventile häufig nicht vollständig schließen, wodurch die Energieeffizienz eines Heizgerätes erheblich gemindert werden kann.

Hiervon ausgehend ist es Aufgabe der Erfindung, ein Differenzdruckventil für ein Heizgerät vorzuschlagen, das die geschilderten Probleme des Standes der Technik zumindest teilweise überwindet. Insbesondere soll das Differenzdruckventil eine präzise Steuerung ermöglichen bzw. ein sensibles Ansprechverhalten bei auftretenden Druckunterschieden ausweisen.

Zudem soll ein hier vorzuschlagendes Differenzdruckventil einfach aufgebaut und kostengünstig herstellbar und auch in bestehenden Heizgeräten einsetzbar sein.

Diese Aufgaben werden gelöst durch die Merkmale der unabhängigen Patentansprüche. Weitere vorteilhafte Ausgestaltungen der hier vorgeschlagenen Lösung sind in den unabhängigen Patentansprüchen angegeben. Es wird darauf hingewiesen, dass die in den abhängigen Patentansprüchen aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Es wird ein Differenzdruckventil für ein Heizgerät vorgeschlagen, das eine (einzelne) Membran als Wirkfläche für einen Differenzdruck aufweist.

Das Differenzdruckventil kann dazu eingerichtet sein, zu öffnen und zu schließen in Abhängigkeit eines (anliegenden) Differenzdruckes. Der Differenzdruck kann beispielsweise eine Druckdifferenz zwischen einem Vorlauf und einem Rücklauf eines Heizkreislaufes einer Heizungsanlage sein. Durch eine Verbindung eines hier vorgeschlagenen Differenzdruckventils mit einem Vorlauf und einem Rücklauf kann eine Druckdifferenz auf eine Wirkfläche einer Membran des Differenzdruckventils wirken. Ein hier vorgeschlagenes Differenzdruckventil kann sich in Abhängigkeit des Differenzdruckes öffnen bzw. schließen. Ein geöffnetes Differenzdruckventil kann vorliegen, wenn ein Durchfluss durch das Differenzdruckventil möglich ist, wobei ein Durchfluss durch ein geschlossenes Differenzdruckventil nicht möglich ist. Beispielsweise bei einem hohen Druck im Vorlauf und einem deutlich geringeren Druck im Rücklauf kann sich ein hier vorgeschlagenes Differenzdruckventil (weitestgehend) vollständig öffnen, wodurch ein Druckausgleich zwischen Vorlauf und Rücklauf des Heizkreislaufes stattfinden kann. Somit kann mittels eines variierenden Differenzdruckes eine (mechanische) Verstellung (Öffnungs- bzw. Schließbewegung) des Differenzdruckventils ausgelöst werden.

Differenzdruckventile nach dem Stand der Technik haben eine Wirkfläche für einen Differenzdruck (auch als Ventilteller bezeichnet) die im Wesentlichen dem Ventilquerschnitt und damit zumeist einem Leitungsquerschnitt entspricht. Für ein Öffnen des Differenzdruckventils kann ein Verstellelement, aufweisend eine Wirkfläche (bzw. einen Ventilteller) und einen Ventilschaft, in einer Führung entgegen einer Federkraft verschoben werden. Die Wirkfläche am Verstellelement ist vergleichsweise klein und kaum elastisch, wodurch mögliche Druckstöße, beispielsweise durch eine Umwälzpumpe, auf das Verstellelement wirken. Auch besteht ein Risiko eines Verkantens des Ventilschaftes in seiner Führung bei einer durch Druck ausgelösten Bewegung.

Gemäß einer vorteilhaften Ausgestaltung kann die Membran des Differenzdruckventils elastisch ausgeführt sein und so auch Druckstöße kompensieren. Die hier vorgeschlagene Membran hat insbesondere folgende Eigenschaften hinsichtlich Ausdehnungsverhalten und/oder Festigkeit:...... Die Membran ist insbesondere so beweglich bzw. verformbar, dass sie einen Ventilhub ermöglicht, der den vollen Querschnitt im Vorlauf freigeben kann. Die Membran kann (dazu) ein Sickenprofil aufweisen.

Gemäß einer vorteilhaften Ausgestaltung kann die Membran aus einem elastischen und temperaturbeständigen Material bestehen. Sie kann insbesondere eine PTFE Folie oder eine Kombination (Verbundmembran) aus PTFE-Folie und Elastomer-Stützmembran (EPDM oder NBR) umfassen. Eine Verbundmembran weist eine höhere Biegewechselfestigkeit auf, ist belastbarer und langlebiger.

Ein hier vorgeschlagenes Differenzdruckventil kann in ein Heizgerät zwischen einer Vorlaufleitung und einer Rücklaufleitung eines Heizkreislaufes installiert werden. Das Differenzdruckventil (Überströmventil) kann eine Verbindung zwischen der Vorlaufleitung und der Rücklaufleitung in Abhängigkeit der Druckdifferenz zwischen Vorlauf- und Rücklaufleitung öffnen und schließen.

Gemäß einer vorteilhaften Ausgestaltung kann eine Membran konzentrisch zu einer Wirkfläche (Ventilteller) eines Verstellelements angeordnet sein und über einen Ventilschaft mit der Wirkfläche verbunden sein. In vorteilhafter Weise kann ein auf Membran und Verstellelement wirkender Differenzdruck als Kraft an beiden Enden des Ventilschaftes wirken, wodurch ein präzises Bewegen des Ventilschaftes in einer Führung ermöglicht wird.

Gemäß einer vorteilhaften Ausgestaltung ist die Wirkfläche der Membran größer als eine Leitungsquerschnittsfläche (oder auch als eine (Wirk-)Fläche des Ventiltellers des Verstellelements). Die Membran kann eine Wirkfläche mit einem Faktor von mindestens 1,5 der Wirkfläche des Verstellelements aufweisen, oder vom mindestens 2-fachen der der Wirkfläche des Verstellelements. Als besonders vorteilhaft hat sich eine Wirkfläche der Membran mit einem Faktor von 2,5 bis 3,5 der Wirkfläche des Verstellelements erwiesen. In vorteilhafter Weise kann die vergrößerte Wirkfläche der Membran für eine deutlich höhere Verstellkraft des Differenzdruckventils sorgen. So kann sich bei einer ca. dreifachen Wirkfläche der Membran eine bis zu neunfach größere Kraftwirkung ergeben. Durch eine Vergrößerung der Verstellkraft kann ein präzises Bewegen und ein sensibles Ansprechverhalten des Verstellelements und damit es Differenzdruckventils ermöglicht werden. In vorteilhafter Weise steigert eine vergrößerte Wirkfläche der Membran die Kraft zur Verstellung des Differenzdruckventils, wodurch ein präziseres Bewegen ermöglicht werden kann und möglicherweise auftretende Stick-Slip-Effekte an Bedeutung verlieren.

Gemäß einer vorteilhaften Ausgestaltung kann ein hier vorgeschlagenes Differenzdruckventil eine Anzeige seiner Funktion, also eine Anzeige einer Öffnungsstellung des Differenzdruckventils, aufweisen. Beispielsweise kann eine Anzeige der Funktion durch einen Ventilschaft, der aus einem Ventilgehäuse herausgeführt ist, erfolgen. Dabei versteht sich, dass der Ventilschaft aus druckbeaufschlagten Bereichen des Gehäuses gasdicht herausgeführt werden sollte. In vorteilhafter Weise ist eine Anzeige durch einen aus dem Ventilgehäuse auskragenden Ventilschaft einfach umsetzbar.

Gemäß einer vorteilhaften Ausgestaltung kann eine Vorspannung eines hier vorgestellten Differenzdruckventils einstellbar sein. Eine Vorspannung kann einer vom Differenzdruck ausgelösten Kraft auf die Wirkfläche der Membran entgegenwirken und so eine Einstellbarkeit des Differenzdruckventils ermöglichen. Die Einstellbarkeit kann sich insbesondere darauf beziehen, wie weit ein Differenzdruck beim Anliegen eines definierten Differenzdruckes geöffnet ist. Beispielsweise kann eine Einstellung einer Vorspannung durch eine Druckfeder auf der, der Wirkfläche abgewandten, Seite der Membran ermöglicht werden. Die Einstellbarkeit kann beispielsweise durch eine Einstellung einer Vorspannung der Druckfeder durch eine Verkürzung des Federweges mittels einer (Einstell-) Schraube erfolgen. Die Druckfeder kann beispielsweise eine Spiralfeder sein. In vorteilhafter Weise kann so eine präzise Einstellbarkeit des Zusammenhangs Wirkdruck und Öffnungsstellung des Differenzdruckventils ermöglicht werden.

Gemäß einer vorteilhaften Ausgestaltung kann ein Wirkdruck von einer Wirkfläche des Verstellelements des Differenzdruckventils durch einen Kanal im Ventilschaft auf die Wirkfläche der Membran übertragen werden. Vorteilhaft wird so ein einfacher Aufbau eines hier vorgeschlagenen Differenzdruckventils ermöglicht.

Gemäß einer vorteilhaften Ausgestaltung kann ein Ventilschaft fest mit einem Verstellelement verbunden oder ein Teil desselben sein und von einer Wirkfläche (Ventilteller) des Verstellelements ein Kanal durch den Ventilschaft in eine Membrankammer führen, wodurch ein Wirken des Differenzdruckes auf eine in der Membrankammer angeordnete Membran ermöglicht werden kann. Der Ventilschaft kann fest mit der Membran verbunden sein, so dass eine durch den Differenzdruck ausgelöste Bewegung der Membran zu einer Bewegung des Ventilschaftes führt und damit auch zu einer Bewegung des Verstellelements, gleichbedeutend mit einer Öffnungs- oder Schließbewegung des Differenzdruckventils.

Nach einem weiteren Aspekt wird auch ein Heizgerät mit einem hier vorgestellten Differenzdruckventil vorgeschlagen. Ein Differenzdruckventil ist häufig Bestandteil eines Heizgerätes einer Heizungsanlage. Das Heizgerät kann ein beliebiges Heizgerät mit einem Heizkreislauf sein, wobei ein hier vorgeschlagenes Differenzdruckventil zwischen einem Vorlauf und einem Rücklauf des Heizkreislaufes angeordnet sein kann. Das Heizgerät kann eine Brennkammer für einen Brennstoff, wie Gas, Wasserstoff oder Heizöl, oder auch eine Wärmepumpe als Wärmeerzeuger aufweisen. Das Heizgerät kann insbesondere ein Gasheizgerät sein, mit einem Gasbrenner und einer Fördereinrichtung, die ein Gemisch aus Gas und Verbrennungsluft (brennfähiges Gemisch) zu einem Gasbrenner fördern kann.

Nach einem weiteren Aspekt wird eine Verwendung einer Membran als Wirkfläche eines Differenzdruckventils für ein Heizgerät vorgeschlagen. Gemäß einer vorteilhaften Ausgestaltung kann die Membran eine Wirkfläche für einen Differenzdruck des Differenzdruckventils aufweisen, die mindestens doppelt oder dreimal so groß wie die Wirkfläche eines Verstellelements des Differenzdruckventils sein kann.

Hier werden somit ein Differenzdruckventil für ein Heizgerät, ein Heizgerät und eine Verwendung vorgeschlagen, die die mit Bezug auf den Stand der Technik geschilderten Probleme zumindest teilweise lösen. Insbesondere kann das Differenzdruckventil sehr präzise eine Öffnungsweite in Abhängigkeit eines anliegenden Differenzdruckes einstellen. Somit tragen das hier vorgeschlagene Differenzdruckventil und das Heizgerät sowie die Verwendung jeweils zumindest dazu bei, einen sicheren und effizienten Betrieb eines Heizgerätes zu gewährleisten. Zudem kann ein hier vorgeschlagenes Differenzdruckventil problemlos in bestehende Heizgeräte integriert werden.

Die Erfindung sowie das technische Umfeld werden nachfolgend anhand der beiliegenden Figur näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in der Figur erläuterten Sachverhalte zu extrahieren und mit anderen Bestandteilen und Erkenntnissen aus der vorliegenden Beschreibung zu kombinieren. Insbesondere ist darauf hinzuweisen, dass die Figur und insbesondere die dargestellten Größenverhältnisse nur schematisch sind. Es zeigt:

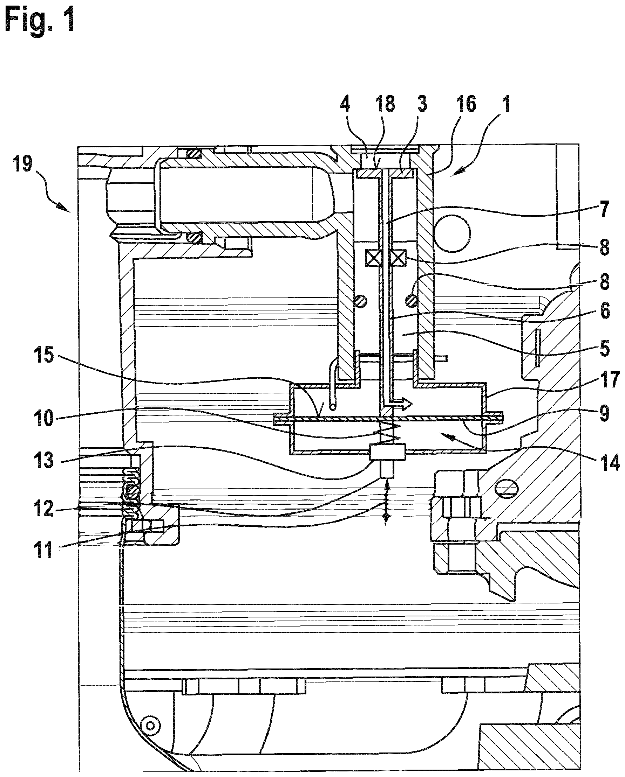

Fig. 1: ein hier vorgeschlagenes Differenzdruckventil.

Fig. zeigt beispielhaft und schematisch ein hier vorgeschlagenes Differenzdruckventil 1. Das Differenzdruckventil 1 kann in einem Heizgerät derart integriert sein, dass eine Verbindung zwischen einer Vorlaufleitung und einer Rücklaufleitung eines Heizkreislaufes 2 in Abhängigkeit einer Druckdifferenz zwischen Vorlaufleitung und Rücklaufleitung geöffnet wird.

Das Differenzdruckventil 1 kann eine Konstantdruckregelung im Heizkreislauf 2 gewährleisten. Hydraulische Druckspitzen, häufig hervorgerufen durch eine Umwälzpumpe des Heizkreislaufes 2, und damit verbundene akustische Störungen können durch ein Differenzdruckventil 1 abgefangen werden. Bei geöffnetem Differenzdruckventil 1 kann ein interner Heizkreislauf betrieben werden, der den Wärmeträger nur innerhalb des Heizgerätes vom Wärmeerzeuger über das Differenzdruckventil 1 zirkulieren lässt. In vorteilhafter Weise kann so sehr schnell eine Vorlaufsolltemperatur des Heizgerätes, beispielsweise nach einem Neustart, erreicht werden.

Auch kann durch die Aufteilung des Volumenstromes eines Wärmeträgers im Heizkreislauf 2 zwischen einem externen (über Verbraucher führende) Heizkreislauf und einem internen Heizkreislauf im Heizgerät auftretenden Teillastzuständen begegnet werden.

Das Differenzdruckventil 1 gemäß Figur 1 kann ein Verstellelement 3 aufweisen, dass zwischen einer Vorlaufkammer 4, die mit einer Vorlaufleitung des Heizkreislaufes 2 verbunden sein kann und einer Rücklaufkammer 5, die mit einer Rücklaufleitung des Heizkreislaufes 2 verbunden sein kann, angeordnet sein kann.

Am Verstellelement 3 kann ein Ventilschaft 6 angeordnet sein, der das Verstellelement 3 mit einer Membran 9 verbindet. Der Ventilschaft 6 kann beispielsweise durch ein Gehäuse 16 des Differenzdruckventils 1 derart linear geführt sein, dass nur eine Linearbewegung in einer Bewegungsrichtung 11 möglich ist.

Der Ventilschaft 6 kann einen Kanal 7 aufweisen, der eine Verbindung zwischen der Vorlaufkammer 4 und einer Membrankammer 17 bewirken kann. Der in der Vorlaufkammer 4 anliegende Differenzdruck zwischen Vorlauf- und Rücklaufleitung kann durch den Kanal 7 in eine Membrankammer 17 geleitet werden und dort auf die Membran 9 als Wirkfläche 15 (Membranwirkfläche) wirken. Die Wirkfläche 15 der Membran 9 kann ca. die dreifache Fläche im Vergleich zur Wirkfläche 18 des Verstellelements 3 (Verstellelementwirkfläche) aufweisen.

Auf der der Wirkfläche 15 der Membran 9 in der Membrankammer 17 abgewandten Seite der Membran kann ein Ausdehnungsbereich angeordnet sein, indem beispielsweise ein Umgebungsmedium wie Luft enthalten sein kann. Im Ausdehnungsbereich 17 kann auch eine Feder 10 angeordnet sein, die eine Rückstellkraft auf die Membran 9 aufbringen kann. Die Feder 10 kann beispielsweise als Spiralfeder ausgeführt sein und eine Einstelleinrichtung 13 kann eine Einstellbarkeit der Vorspannung der Feder 10 ermöglichen, indem der Federweg der Feder 10 durch die Einstelleinrichtung 13 einstellbar sein kann.

Der Ventilschaft 6 kann fest mit der Membran 9 verbunden sein, so dass eine Kraft, die eine Bewegung in Bewegungsrichtung 11 der Membran 9 auslöst, auf den Ventilschaft 6 und damit das Verstellelement 3 von der Membran 9 übertragen werden kann. Ein als Anzeige 12 bezeichneter Bereich des Ventilschaftes 6 kann aus dem Ausdehnungsbereich 14 herausragen und so die Öffnungsstellung des Differenzdruckventils 1 anzeigen.

Der Ventilschaft 6 und am Gehäuse 16 des Differenzdruckventils 1 können Dichtungen 8 vorgesehen sein, die eine Verbindung der Rücklaufkammer 5 mit der Rücklaufleitung abdichten, so dass eine weitere Bewegung des Ventilschaftes 6 in Richtung der Membran 9 verhindert werden kann.

### Bezugszeichenliste

- 1: Differenzdruckventil
- 2: Heizkreislauf
- 3: Verstellelement
- 4: Vorlaufkammer
- 5: Rücklaufkammer
- 6: Ventilschaft
- 7: Kanal
- 8: Dichtung
- 9: Membran
- 10: Feder
- 11: Bewegungsrichtung
- 12: Anzeige
- 13: Einstelleinrichtung
- 14: Ausdehnungsbereich
- 15: Wirkfläche der Membran
- 16: Gehäuse
- 17: Membrankammer
- 18: Wirkfläche eines Verstellelements

## Patentansprüche

1. Differenzdruckventil (1) für ein Heizgerät (19), aufweisend eine Membran (9) als Wirkfläche (15) für den Differenzdruck.

2. Differenzdruckventil (1) nach Anspruch 1, wobei die Wirkfläche (15) der Membran (9) größer als eine Wirkfläche (18) eines Verstellelements (3) ist.

3. Differenzdruckventil (1) nach Anspruch 2, wobei eine Wirkfläche (15) der Membran (9) mindestens zweifach der Wirkfläche (18) eines Verstellelements (3) ist.

4. Differenzdruckventil (1) nach einem der vorangehenden Ansprüche, wobei das Differenzdruckventil (1) eine Anzeige (12) einer Position des Verstellelements (3) aufweist.

5. Differenzdruckventil (1) nach Anspruch 4, wobei eine Anzeige (12) einer Position des Verstellelements (3) des Differenzdruckventils (1) mittels eines aus einem Gehäuse (16) auskragenden Ventilschaftes (6) erfolgt.

6. Differenzdruckventil (1) nach einem der vorangehenden Ansprüche, wobei eine, einem Wirkdruck auf die Membran (9) entgegenwirkende Vorspannung des Differenzdruckventils (1) einstellbar ist.

7. Differenzdruckventil (1) nach einem der vorangehenden Ansprüche, wobei ein Kanal (7) innerhalb eines Ventilschafts (6) einen Wirkdruck auf eine Membran (9) übertragen kann.

8. Heizgerät (19), umfassend ein Differenzdruckventil (1) nach einem der vorangehenden Ansprüche.

9. Verwendung einer Membran (9) zum Schalten eines Differenzdruckventils (1) eines Heizgerätes (19).
